# EUROPEAN PATENT APPLICATION

(11) **EP 4 024 187 A1**
(43) Date of publication of application: **06.07.2022**
(21) Application number: 20866545.5
(22) Date of filing: 15.09.2020
(51) Int. Cl.: G06F 3/0487

(54) **VOLUME ADJUSTMENT METHOD AND APPARATUS, AND TERMINAL DEVICE AND STORAGE MEDIUM**

(30) Priority: 19.09.2019 CN 201910885134
(71) Applicant: Huawei Technologies Co., Ltd., Longgang District Shenzhen, Guangdong 518129 (CN)
(72) Inventor: CHEN, Hao, Shenzhen, Guangdong 518129 (CN); ZHENG, Aihua, Shenzhen, Guangdong 518129 (CN); CHEN, Xiaoxiao, Shenzhen, Guangdong 518129 (CN); WANG, Jianfeng, Shenzhen, Guangdong 518129 (CN); XU, Jie, Shenzhen, Guangdong 518129 (CN)
(74) Representative: Pfenning, Meinig & Partner mbB
(86) International application number: PCT/CN2020/115230
(87) International publication number: WO 2021/052302

(57) **Abstract**

A volume adjustment method and apparatus, a terminal device, and a storage medium are provided. The method is applied to a terminal device. In the method, a screen of the terminal device in a first physical form receives first input information of a volume adjustment region (S701); a volume of the terminal device is adjusted based on the first input information (S702); the screen changes from the first physical form to a second physical form, where the first physical form is different from the second physical form; and the volume adjustment region adapts to the second physical form to automatically change in location (S703); second input information of the volume adjustment region is received in the second physical form (S704); and the volume of the terminal device is adjusted based on the second input information (S705). In the method, the volume adjustment region on the screen of the terminal device may automatically change in location based on a change of a physical form of the screen of the terminal device, to make it easier for a user to adjust the volume of the terminal device in the volume adjustment region.

## Description

This application claims priority to Chinese Patent Application No. 201910885134.9, filed with the China National Intellectual Property Administration on September 19, 2019 and entitled "VOLUME ADJUSTMENT METHOD AND APPARATUS, TERMINAL DEVICE, AND STORAGE MEDIUM", which is incorporated herein by reference in its entirety.

### TECHNICAL FIELD

Embodiments of this application relate to terminal technologies, and in particular, a volume adjustment method and apparatus, a terminal device, and a storage medium.

### BACKGROUND

With development of electronic technologies, terminal devices (for example, smartphones) become essential tools for users to learn, entertain, communicate, and the like. Currently, terminal devices are developing toward a super curved screen and a flexible screen. For example, the terminal device can implement a plurality of physical forms such as folding of the terminal device by using a flexible screen.

In the conventional technology, a volume button may be disposed on a side edge of a terminal device, and a user adjusts a volume of the terminal device by operating the volume button. When the terminal device uses a super curved screen, the side edge is occupied by the screen, and the volume button cannot be disposed. In addition, when the terminal device is foldable by using a flexible screen, disposing the volume button on the side edge of the terminal device causes an inconvenient operation because of various physical forms of the terminal device.

### SUMMARY

Embodiments of this application provide a volume adjustment method and apparatus, a terminal device, and a storage medium, to make it easier for a user to adjust a volume of a terminal device in a volume adjustment region.

According to a first aspect, a volume adjustment method is provided. The method may be applied to a terminal device, or may be applied to a chip in a terminal device. The following describes the method by using an example in which the method is applied to the terminal device. In the method, a screen of the terminal device in a first physical form receives first input information of a volume adjustment region. A volume of the terminal device is adjusted based on the first input information. The screen changes from the first physical form to a second physical form. The first physical form is different from the second physical form. The volume adjustment region adapts to the second physical form to automatically change in location. Second input information of the volume adjustment region is received in the second physical form. The volume of the terminal device is adjusted based on the second input information.

It may be understood that, in this embodiment of this application, the volume adjustment region is set on the screen of the terminal device, and the volume adjustment region may automatically change in location based on different physical forms of the screen of the terminal device, to make it easier to adjust the volume of the terminal device. Correspondingly, when receiving input information in the volume adjustment region, the terminal device may adjust the volume of the terminal device based on the input information.

In a possible design, the first physical form or the second physical form of the screen may be any one of physical forms such as an expanded form, a folded form, a holder form, a landscape form, and a portrait form, the holder form means that the screen is folded at a predetermined angle, and the predetermined angle is greater than or equal to a folding angle of the screen in the folded form, and is less than or equal to a folding angle of the screen in the expanded form.

In a possible implementation of this design, when the screen is in the expanded form, a location of the volume adjustment region on the screen is a location on a right side of the screen.

In a possible implementation of this design, when the screen is in the folded form, a location of the volume adjustment region on the screen is a folded location of the screen.

In a possible implementation of this design, when the screen is in the holder form, a location of the volume adjustment region on the screen is a bent location of the screen.

In this design, the screen has a plurality of physical forms. It may be understood that, in addition to the foregoing physical forms in this embodiment of this application, all other forms that are different from the foregoing physical forms and that are figured out by a person skilled in the art fall within the protection scope of this embodiment of this application.

In a possible design, an interface of the terminal device in the second physical form is a user interface of a target application, and the adjusting the volume of the terminal device based on the second input information includes: adjusting a volume of the target application based on the second input information. The target application is a program that enables the volume adjustment region to adapt to a physical form of the screen to automatically change in location.

In a possible implementation of this design, in this embodiment of this application, establishing a volume adjustment region for at least one physical form of the screen may be performing, when the interface currently displayed by the terminal device is the user interface of the target application, a series of steps such as displaying a setting interface when a setting instruction entered by a user is received. It may be understood that, for different applications, locations of corresponding volume adjustment regions on the screen when the screen is in a same physical state may be different.

In this design, in this embodiment of this application, the volume adjustment method in this embodiment of this application may be applied to the target application, to improve flexibility of the terminal device.

In a possible design, before the second input information of the volume adjustment region is received in the second physical form, the method further includes: when wakeup information that is entered by the user and that is used to wake up the volume adjustment region is received, enabling the terminal device to receive the second input information in the volume adjustment region.

In this embodiment of this application, a rule for triggering the wakeup information to be entered may be preset. When receiving the wakeup information that is entered by the user and that is used to wake up the volume adjustment region, the terminal device is enabled to receive input information in the volume adjustment region. The user may double-tap the screen of the terminal device to trigger the wakeup information to be entered; or the user may enter a preset track on the screen of the terminal device to trigger the wakeup information to be entered, where for example, entering the preset track may be drawing a "circle" or making a "check mark" by the user on the screen of the terminal device; or the user may double-tap the volume adjustment region to trigger the wakeup information to be entered.

In this design, when the volume adjustment region is woken up, the second input information of the volume adjustment region may be received, to avoid a user misoperation.

In a possible design, before the second input information of the volume adjustment region is received in the second physical form, the method further includes: determining the volume adjustment region of the screen based on the second physical form of the screen.

In a possible implementation of this design, the terminal device stores a volume adjustment region for at least one physical form of the screen. After a current physical form of the screen is determined, a volume adjustment region of the screen may be determined based on the current physical form of the screen and a correspondence.

In a possible implementation of this design, the volume adjustment region for the at least one physical form of the screen may be defined by the user. A definition manner of the user may be as follows:
receiving a setting instruction entered by the user, where the setting instruction is used to instruct to enter a setting interface for setting a volume adjustment region for at least one physical form of the screen; displaying the setting interface, where the at least one physical form of the screen and at least one to-be-selected volume adjustment region corresponding to each physical form of the screen are displayed in the setting interface; determining a volume adjustment region for each physical form of the screen based on selection information of the user for the at least one to-be-selected volume adjustment region corresponding to each physical form of the screen; and storing the volume adjustment region for each physical form of the screen.

For the setting instruction, refer to the foregoing manner of triggering the wakeup information.

In this design, the user may set, based on different physical forms of the screen of the terminal device, different volume adjustment regions that facilitate a user operation, to further make it easier for the user to adjust the volume of the terminal device.

In a possible design, the first physical form is a physical form of the screen of the terminal device when an unlocked state is entered.

In a possible design, the first input information/the second input information includes touch information and/or gesture information.

It should be understood that the foregoing manner applicable to the second input information is also applicable to the first input information.

According to a second aspect, a volume adjustment apparatus is provided. The apparatus includes:
a transceiver module, used by a screen of the terminal device in a first physical form to receive first input information of a volume adjustment region; and a processing module, configured to adjust a volume of the terminal device based on the first input information, where the screen changes from the first physical form to a second physical form, where the first physical form is different from the second physical form; the volume adjustment region adapts to the second physical form to automatically change in location; the transceiver module is further configured to receive, in the second physical form, second input information of the volume adjustment region; and the processing module is further configured to adjust the volume of the terminal device based on the second input information.

In a possible design, the processing module is further configured to determine the volume adjustment region of the screen based on the second physical form of the screen.

In a possible design, the first physical form or the second physical form of the screen includes an expanded form, a folded form, a holder form, a landscape form, or a portrait form, the holder form means that the screen is folded at a predetermined angle, and the predetermined angle is greater than or equal to a folding angle of the screen in the folded form, and is less than or equal to a folding angle of the screen in the expanded form.

In a possible design, when the screen is in the expanded form, a location of the volume adjustment region on the screen is a location on a right side of the screen; when the screen is in the folded form, a location of the volume adjustment region on the screen is a folded location of the screen; and when the screen is in the holder form, a location of the volume adjustment region on the screen is a bent location of the screen.

In a possible design, an interface of the terminal device in the second physical form is a user interface of a target application; and the processing module is specifically configured to adjust a volume of the target application based on the second input information. The target application is a program that enables the volume adjustment region to adapt to a physical form of the screen to automatically change in location.

In a possible design, the transceiver module is further configured to receive a setting instruction entered by a user, where the setting instruction is used to instruct to enter a setting interface for setting a volume adjustment region for each physical form of the screen;
a display module is configured to display the setting interface, where at least one physical form of the screen and at least one to-be-selected volume adjustment region corresponding to each physical form of the screen are displayed in the setting interface;
the processing module is further configured to determine the volume adjustment region for each physical form of the screen based on selection information of the user for the at least one to-be-selected volume adjustment region corresponding to each physical form of the screen; and
a storage module is configured to store the volume adjustment region for each physical form of the screen.

In a possible design, the processing module is further configured to: when the transceiver module receives wakeup information that is entered by the user and that is used to wake up the volume adjustment region, enable the terminal device to receive the second input information in the volume adjustment region.

In a possible design, the first physical form is a physical form of the screen when an unlocked state is entered.

In a possible design, the first input information/the second input information includes at least one of the following: touch pressure, a touch location, touch duration, and a touch area.

For beneficial effects of the volume adjustment apparatus provided in the second aspect, refer to the beneficial effects brought by the first aspect and the possible designs. Details are not described herein again.

According to a third aspect, a terminal device is provided and includes:
a transceiver, used by a screen of the terminal device in a first physical form to receive first input information of a volume adjustment region; and a processor, configured to adjust a volume of the terminal device based on the first input information, where the screen changes from the first physical form to a second physical form, where the first physical form is different from the second physical form; the volume adjustment region adapts to the second physical form to automatically change in location; the transceiver is further configured to receive, in the second physical form, second input information of the volume adjustment region; and the processor is further configured to adjust the volume of the terminal device based on the second input information.

In a possible design, the processor is further configured to determine the volume adjustment region of the screen based on the second physical form of the screen.

In a possible design, the first physical form or the second physical form of the screen includes an expanded form, a folded form, a holder form, a landscape form, or a portrait form, the holder form means that the screen is folded at a predetermined angle, and the predetermined angle is greater than or equal to a folding angle of the screen in the folded form, and is less than or equal to a folding angle of the screen in the expanded form.

In a possible design, when the screen is in the expanded form, a location of the volume adjustment region on the screen is a location on a right side of the screen; when the screen is in the folded form, a location of the volume adjustment region on the screen is a folded location of the screen; and when the screen is in the holder form, a location of the volume adjustment region on the screen is a bent location of the screen.

In a possible design, an interface of the terminal device in the second physical form is a user interface of a target application; and the processor is specifically configured to adjust a volume of the target application based on the second input information. The target application is a program that enables the volume adjustment region to adapt to a physical form of the screen to automatically change in location.

In a possible design, the terminal device further includes a display and a memory; the transceiver is further configured to receive a setting instruction entered by a user, where the setting instruction is used to instruct to enter a setting interface for setting a volume adjustment region for each physical form of the screen; the display is configured to display the setting interface, where at least one physical form of the screen and at least one to-be-selected volume adjustment region corresponding to each physical form of the screen are displayed in the setting interface; the processor is further configured to determine the volume adjustment region for each physical form of the screen based on selection information of the user for the at least one to-be-selected volume adjustment region corresponding to each physical form of the screen; and the memory is configured to store the volume adjustment region for each physical form of the screen.

In a possible design, the processor is further configured to: when the transceiver receives wakeup information that is entered by the user and that is used to wake up the volume adjustment region, enable the terminal device to receive the second input information in the volume adjustment region.

In a possible design, the first physical form is a physical form of the screen when an unlocked state is entered.

In a possible design, the first input information/the second input information includes at least one of the following: touch pressure, a touch location, touch duration, and a touch area.

For beneficial effects of the terminal device provided in the third aspect, refer to the beneficial effects brought by the first aspect and the possible designs. Details are not described herein again.

According to a fourth aspect, a terminal device is provided. The terminal device includes a processor, a memory, and a transceiver. The transceiver is coupled to the processor, and the processor controls a reception/transmission action of the transceiver.

The memory is configured to store computer executable program code. The program code includes instructions. When the processor executes the instructions, the instructions cause the terminal device to perform the method provided in the first aspect or each possible design of the first aspect.

According to a fifth aspect, a terminal device is provided. The terminal device includes a unit, a module, or a circuit configured to perform the method provided in the first aspect or each possible design of the first aspect.

According to a sixth aspect, a terminal device (for example, a chip) is provided. The terminal device stores a computer program, and when the computer program is executed by the terminal device, the method provided in the first aspect or each possible design of the first aspect is implemented.

According to a seventh aspect, a computer program product including instructions is provided. When the computer program product runs on a computer, the computer performs the method in the first aspect or each possible design of the first aspect.

According to an eleventh aspect, a computer readable storage medium is provided. The computer readable storage medium stores instructions, and when the instructions run on a computer, the computer performs the method in the first aspect or each possible design of the first aspect.

The embodiments of this application provide a volume adjustment method and apparatus, a terminal device, and a storage medium. The method is applied to a terminal device. In the method, a screen of the terminal device in a first physical form receives first input information of a volume adjustment region; a volume of the terminal device is adjusted based on the first input information; the screen changes from the first physical form to a second physical form, where the first physical form is different from the second physical form; the volume adjustment region adapts to the second physical form to automatically change in location; second input information of the volume adjustment region is received in the second physical form; and the volume of the terminal device is adjusted based on the second input information. In the method, the volume adjustment region on the screen of the terminal device may automatically change in location based on a change of a physical form of the screen of the terminal device, to make it easier for a user to adjust the volume of the terminal device in the volume adjustment region.

### BRIEF DESCRIPTION OF DRAWINGS

FIG. 1 is a schematic diagram 1 of a terminal device in the conventional technology;
FIG. 2 is a schematic diagram 2 of a terminal device in the conventional technology;
FIG. 3 is a schematic diagram 3 of a terminal device in the conventional technology;
FIG. 4 is a schematic diagram 4 of a terminal device in the conventional technology;
FIG. 5 is a schematic diagram of a disposing location of a volume button corresponding to FIG. 4;
FIG. 6A is a schematic diagram 5 of a terminal device in the conventional technology;
FIG. 6B is a schematic diagram 6 of a terminal device in the conventional technology;
FIG. 6C is a schematic diagram 7 of a terminal device in the conventional technology;
FIG. 6D is a schematic diagram 8 of a terminal device in the conventional technology;
FIG. 7 is a schematic flowchart of an embodiment of a volume adjustment method according to the embodiments of this application;
FIG. 8 is a schematic diagram 1 of a terminal device according to an embodiment of this application;
FIG. 9 is a schematic diagram 2 of a terminal device according to an embodiment of this application;
FIG. 10 is a schematic diagram 3 of a terminal device according to an embodiment of this application;
FIG. 11 is a schematic flowchart of another embodiment of a volume adjustment method according to the embodiments of this application;
FIG. 12 is a schematic diagram of an interface change of a terminal device according to an embodiment of this application;
FIG. 13 is a schematic diagram 1 of an interface of a terminal device according to an embodiment of this application;
FIG. 14 is a schematic diagram 2 of an interface of a terminal device according to an embodiment of this application;
FIG. 15 is a schematic diagram of a setting interface according to an embodiment of this application;
FIG. 16 is a schematic diagram of an operating environment of a terminal device according to an embodiment of this application;
FIG. 17 is a signaling flowchart of a volume adjustment method according to an embodiment of this application;
FIG. 18 is a schematic diagram of a structure of a volume adjustment module according to an embodiment of this application; and
FIG. 19 is a schematic diagram of a structure of a terminal device according to an embodiment of this application.

### DESCRIPTION OF EMBODIMENTS

A terminal device in the embodiments of this application may also be referred to as a terminal terminal, user equipment (user equipment, UE), a mobile station (mobile station, MS), a mobile terminal (mobile terminal, MT), and the like. The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that all terminal devices in the embodiments of this application are devices with touchscreens. A user may trigger, by touching the screen of the terminal device, the terminal device to perform a corresponding operation. The following embodiments use an example in which the terminal device is a mobile phone to describe the volume adjustment method provided in the embodiments of this application.

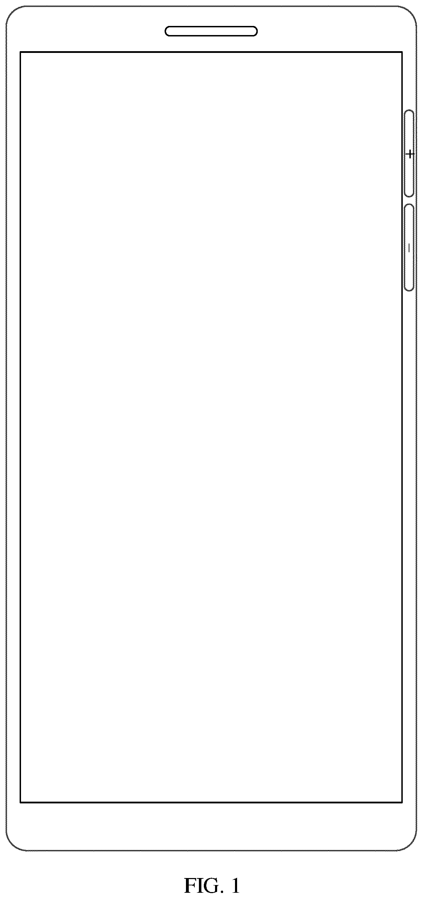

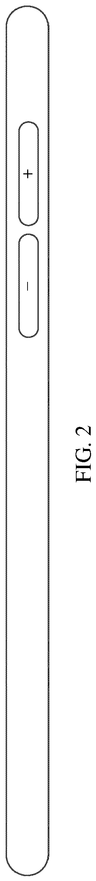

FIG. 1 is a schematic diagram 1 of a terminal device in the conventional technology. FIG. 1 is a front view of the terminal device in the conventional technology. A screen is disposed on a front surface of the terminal device, and a volume button may be disposed on a side edge. A user may press the volume button disposed on the terminal device, so that the terminal device performs an operation triggered by pressing the control button. For example, the user may press the volume button, so that the terminal increases a volume or decreases a volume. FIG. 2 is a schematic diagram 2 of a terminal device in the conventional technology. FIG. 2 is a side view of the terminal device. A volume up button and a volume down button are disposed on a side edge of the terminal device.

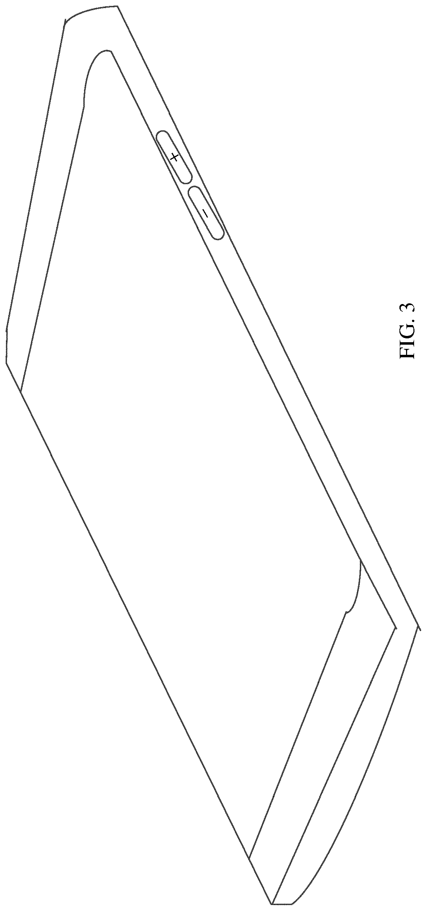

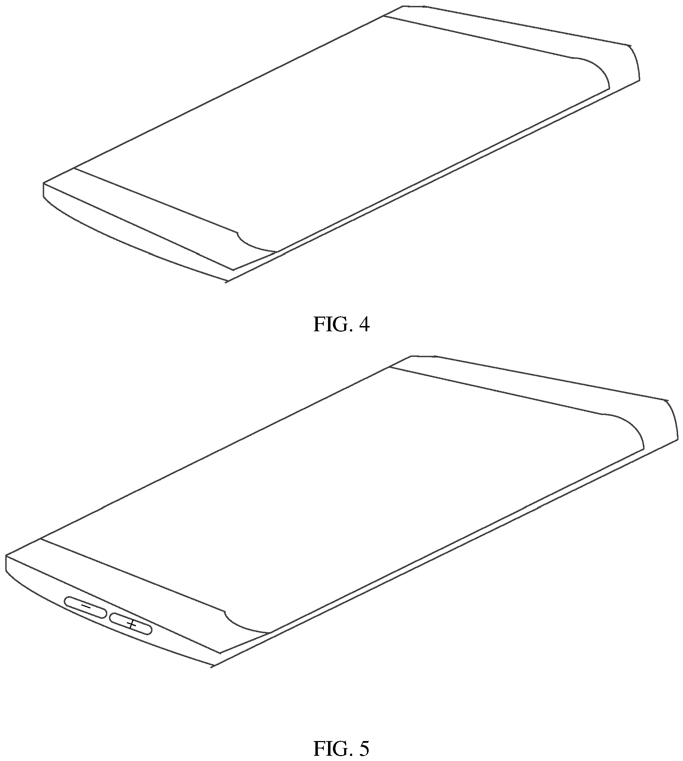

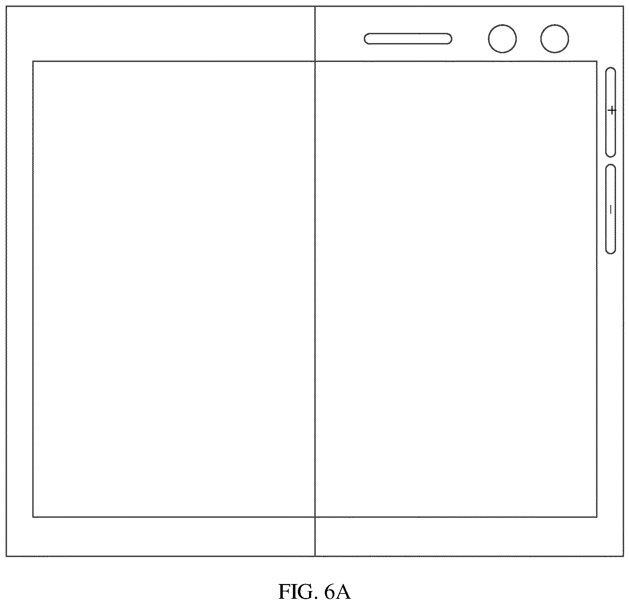

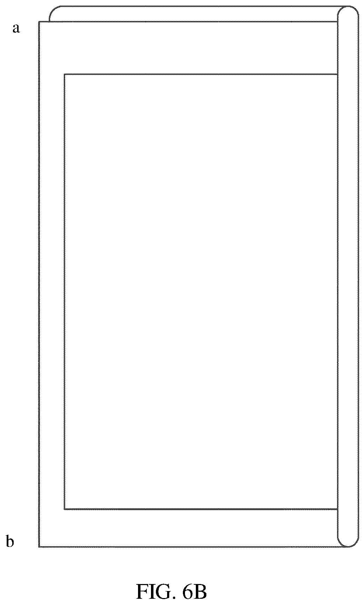

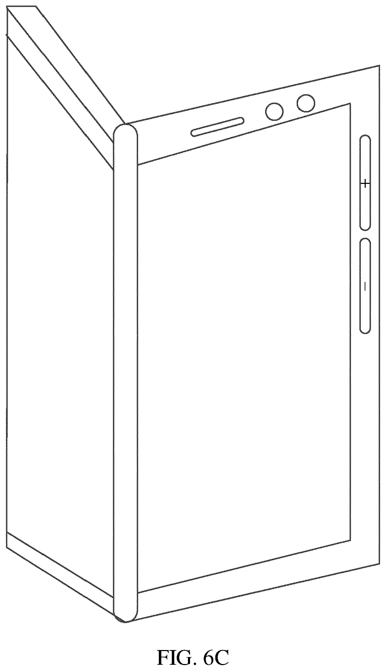

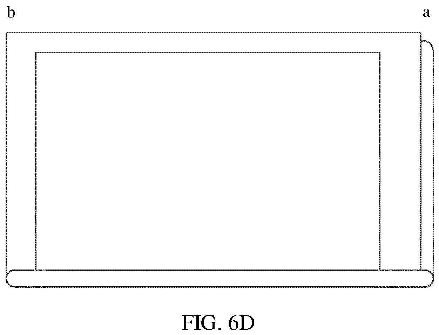

With continuous development of terminal devices, screens of the terminal devices are developing toward a curved screen, a super curved screen, a flexible screen, and the like. FIG. 3 is a schematic diagram 3 of a terminal device in the conventional technology. FIG. 4 is a schematic diagram 4 of a terminal device in the conventional technology. FIG. 5 is a schematic diagram of a disposing location of a volume button corresponding to FIG. 4. FIG. 6A is a schematic diagram 5 of a terminal device in the conventional technology. FIG. 6B is a schematic diagram 6 of a terminal device in the conventional technology. FIG. 6C is a schematic diagram 7 of a terminal device in the conventional technology. FIG. 6D is a schematic diagram 8 of a terminal device in the conventional technology.

As shown in FIG. 3, a screen may be disposed on a front surface and a side surface of a terminal device with a curved screen. For the terminal device with the curved screen, a volume button may be disposed at a location that is on the side surface of the terminal device and at which the screen is not disposed, and the location is closer to a back surface of the terminal device than a disposing location of the volume button in FIG. 2. The disposing location of the volume button in FIG. 3 may cause an inconvenient user operation. In addition, the volume button may be alternatively disposed on a side edge of an upper end or a lower end the terminal device, and this also causes an inconvenient user operation.

As shown in FIG. 4, a screen is disposed on a front surface and a side surface of a terminal device with a super curved screen. A screen disposed on the side surface occupies a location of a volume button. If an existing disposing manner of the volume button is used, the volume button cannot be placed. If the volume button is disposed on a side edge of an upper end or a lower end of the terminal device, for example, is disposed on a side edge of the lower end of the terminal device, as shown in FIG. 5, an inconvenient user operation is caused.

FIG. 6A to FIG. 6C show terminal devices with flexible screens. Because the flexible screen has characteristics of being foldable and bendable, the terminal device with the flexible screen is also foldable and bendable accordingly, in other words, the terminal device with the flexible screen may have a plurality of physical forms. The physical forms may include an expanded form, a folded form, a holder form, a landscape form, a portrait form, or the like, the holder form means that the screen is folded at a predetermined angle, and the predetermined angle is greater than or equal to a folding angle of the screen in the folded form, and is less than or equal to a folding angle of the screen in the expanded form, as shown in FIG. 6C.

FIG. 6A is a diagram in which a terminal device with a flexible screen is in the expanded form. The screen may be disposed on a front surface of the terminal device. A volume button may be disposed on a side edge of the terminal device in FIG. 6A. When the terminal device is in the expanded state, location disposing of the volume button may cause an inconvenient user operation because a size of the screen is relatively large. In addition, because the terminal device has a plurality of physical forms, for example, a terminal device shown in FIG. 6B is in the folded form, or a terminal device shown in FIG. 6C is in any holder form, disposing the volume button at the location shown in FIG. 6A causes an inconvenient user operation. It should be understood that, that the terminal device is in the expanded form, the folded form, the holder form, the landscape form, the portrait form, or the like indicates that the screen of the terminal device is in the physical form of the expanded form, the folded form, the holder form, the landscape form, the portrait form, or the like.

It should be understood that all the terminal devices shown in FIG. 6A to FIG. 6C are in the portrait form. FIG. 6D is an example diagram in which a screen of the terminal device corresponding to FIG. 6B is in the landscape form. It should be understood that the landscape form and the portrait form in the embodiments of this application may be defined based on a location of a preset side edge of the terminal device. For example, as shown in FIG. 6B and FIG. 6D, when a side edge ab of the terminal device is in a first direction, the screen of the terminal device is in the portrait form, or when a side edge ab of the terminal device is in a second direction, the screen of the terminal device is in the landscape form. The first direction may be a direction parallel to a direction of gravity, and the second direction is perpendicular to the first direction.

To resolve the problem of the inconvenient user operation on the volume button of the terminal device with the curved screen, the super curved screen, the flexible screen, or the like, the embodiments of this application provide a volume adjustment method. In the method, a volume adjustment region is set on a screen of a terminal device, and the volume adjustment region may automatically change in location based on different physical forms of the screen of the terminal device, to make it easier to adjust a volume of the terminal device. Correspondingly, when receiving input information in the volume adjustment region, the terminal device may adjust the volume of the terminal device based on the input information. It may be understood that, in the embodiments of this application, different volume adjustment regions that facilitate a user operation may be correspondingly set based on different physical forms of the screen of the terminal device, to further make it easier for a user to adjust the volume of the terminal device.

The following describes the technical solutions in the embodiments of this application in detail with reference to specific embodiments. The following several specific embodiments may be combined with each other. Same or similar concepts or processes may not be described in some embodiments.

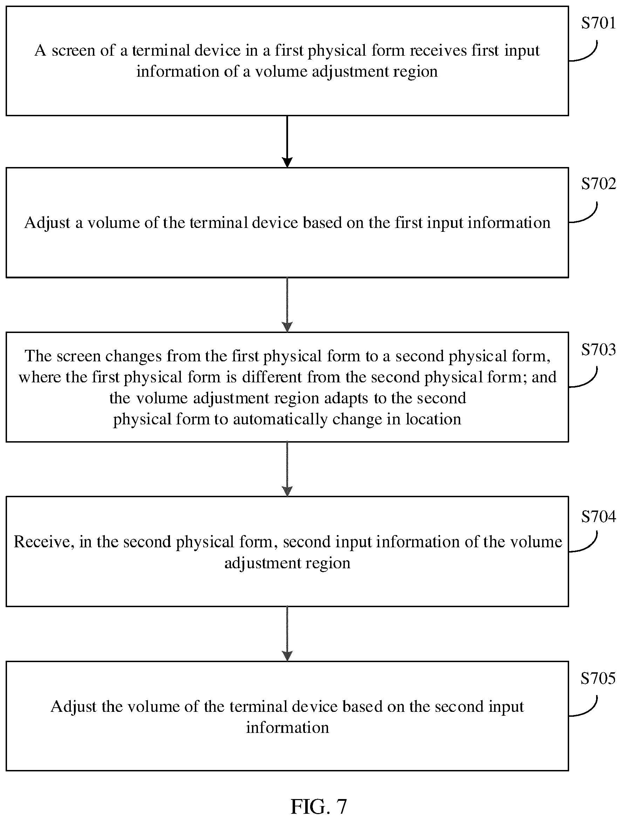

FIG. 7 is a schematic flowchart of an embodiment of a volume adjustment method according to the embodiments of this application. As shown in FIG. 7, the method includes the following steps.

S701: A screen of a terminal device in a first physical form receives first input information of a volume adjustment region.

S702: Adjust a volume of the terminal device based on the first input information.

S703: The screen changes from the first physical form to a second physical form, where the first physical form is different from the second physical form; and the volume adjustment region adapts to the second physical form to automatically change in location.

S704: Receive, in the second physical form, second input information of the volume adjustment region.

S705: Adjust the volume of the terminal device based on the second input information.

A physical form of the screen of the terminal device in this embodiment of this application may change. The physical form of the screen of the terminal device may be shown in FIG. 3 to FIG. 6D. The physical form of the screen may include an expanded form, a folded form, a holder form, a landscape form, a portrait form, or another available form. It may be understood that when the screen of the terminal device is in the foregoing physical forms, the screen of the terminal device may be a curved screen, a super curved screen, or the like. This is not limited in this embodiment of this application.

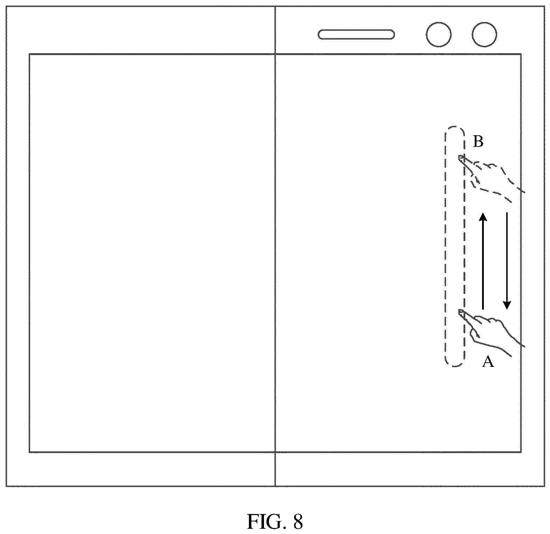

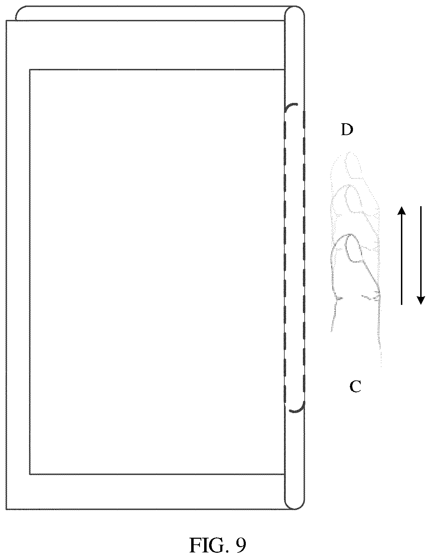

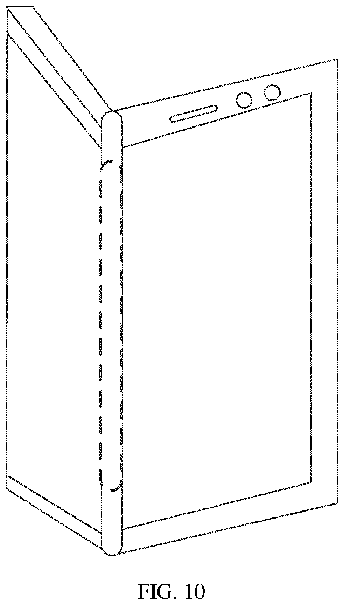

In this embodiment of this application, a location of the volume adjustment region on the screen when the screen of the terminal is in the first physical form is described with reference to FIG. 8 to FIG. 10 by using an example in which the terminal device is a mobile phone. FIG. 8 is a schematic diagram 1 of a terminal device according to an embodiment of this application. FIG. 9 is a schematic diagram 2 of a terminal device according to an embodiment of this application. FIG. 10 is a schematic diagram 3 of a terminal device according to an embodiment of this application. The first physical form may be any one of physical forms such as the expanded form, the folded form, the landscape form, and the portrait form.

As shown in FIG. 8, when the first physical form of the screen of the terminal device is the expanded form, the volume adjustment region may be set at a location that facilitates a user operation on the screen, for example, a location on a right side of the screen. The volume adjustment region may be shown in a dotted-line box in FIG. 8. As shown in FIG. 9, when the first physical form of the screen of the terminal device is the folded form, for example, when the screen of the terminal device is folded in half once, the volume adjustment region may be set at a location that facilitates a user operation on the screen, for example, a location at which the screen is folded in half. The volume adjustment region may be shown in a dotted-line box in FIG. 9. As shown in FIG. 10, when the first physical form of the screen of the terminal device is the holder form, for example, when the screen of the terminal device is bent in an arc shape, the volume adjustment region may be set at a location that facilitates a user operation on the screen, for example, a bent location of the screen. The volume adjustment region may be shown in a dotted-line box in FIG. 10. It may be understood that, in this embodiment of this application, different volume adjustment regions that facilitate a user operation may be correspondingly set based on physical forms of the screen of the terminal device, to further make it easier for a user to adjust the volume of the terminal device. It should be understood that the screens in FIG. 8 to FIG. 10 are all in the portrait form, and when the physical form of the screen is the landscape state, as shown in FIG. 6D, the volume adjustment region may be at the location on the right side of the screen.

In this embodiment of this application, when the screen of the terminal device is in the first physical form, the user may trigger, by using the volume adjustment region corresponding to the first physical form, the first input information to be entered. The first input information entered by the user in the volume adjustment region may be touch information, gesture information, or the like. Correspondingly, the terminal device may receive the first input information of the volume adjustment region to adjust the volume of the terminal device.

In a possible implementation, the first input information in this embodiment of this application is touch information, and the terminal device adjusts the volume of the terminal device based on the received touch information of the volume adjustment region. Optionally, the touch information may include at least one of the following: touch pressure, a touch location, touch duration, and a touch area. It should be understood that, in this embodiment of this application, for a form of the touch information that is of the volume adjustment region and that is received by the terminal device, refer to a form of received touch information (for example, tapping, sliding, or pressing) of a user for a screen in the conventional technology, and this is not limited in this embodiment of this application.

In a possible implementation, the first input information in this embodiment of this application is gesture information, and the terminal device adjusts the volume of the terminal device based on the received gesture information of the volume adjustment region. Optionally, the gesture information may be a gesture. It should be understood that, in this embodiment of this application, for a manner of obtaining the received gesture information of the volume adjustment region of the screen of the terminal device, refer to a manner of receiving gesture information of a user for a screen (for example, a finger faces upward, a finger faces upward, a hand moves up, or a hand moves down) in the conventional technology, and this is not limited in this embodiment of this application.

In S702, after receiving the first input information, the terminal device may adjust the volume of the terminal device based on the first input information. It should be understood that adjusting the volume of the terminal device in this embodiment is adjusting a volume played by the terminal device.

In a possible implementation, in this embodiment of this application, volume adjustment operations of the terminal device that are triggered by different input information may be preset, so that when corresponding input information is received, an operation triggered by the touch information is performed. The input information includes the first input information.

For example, if the first input information is touch information, and the touch information includes a touch location, as shown in FIG. 8, when the touch location slides from a location A to a location B in the volume adjustment region, the terminal device may increase the volume of the terminal device based on the touch location. Correspondingly, when the touch location slides from the location B to the location A in the volume adjustment region, the terminal device may decrease the volume of the terminal device based on the touch location.

For example, if the touch information includes touch pressure, volume adjustment operations triggered by different touch pressure may be preset in this embodiment of this application. For example, when the touch pressure is greater than preset pressure, the terminal device may increase the volume of the terminal device based on the touch pressure. For example, when the touch pressure is less than the preset pressure, the terminal device may decrease the volume of the terminal device based on the touch pressure. It may be understood that, if the touch information includes touch duration and a touch area, a same setting manner as the touch pressure may also be used to trigger an operation of increasing or decreasing the volume of the terminal device when the terminal device detects different touch duration or touch areas. Details are not described herein again.

It should be understood that, in this embodiment of this application, volume adjustment operations triggered by different touch information may be alternatively set by using a combination form of the touch pressure, the touch location, the touch duration, the touch area, and the like that are included in the touch information. For example, if the touch information includes a touch location and touch duration, as shown in FIG. 8, when the touch location slides from the location A to the location B in the volume adjustment region and the touch duration is greater than preset duration, the terminal device may increase the volume of the terminal device based on the touch location. Correspondingly, when the touch location slides from the location B to the location A in the volume adjustment region and the touch duration is greater than the preset duration, the terminal device may decrease the volume of the terminal device based on the touch location. In this example, a user misoperation can be avoided. For example, if the user performs an unintentional or exploratory operation of sliding a finger from the location A to the location B, but touch duration is less than the preset duration, the terminal device may not perform an operation on the touch information of the user in this embodiment of this application.

For example, if the first input information is gesture information, as shown in FIG. 9, when a gesture in the gesture information moves from a location C to a location D in the volume adjustment region, the terminal device may increase the volume of the terminal device based on the gesture. Correspondingly, when the gesture moves from the location D to the location C in the volume adjustment region, the terminal device may decrease the volume of the terminal device based on the gesture.

In a possible implementation, to avoid a user misoperation, in this embodiment of this application, before input information of the volume adjustment region of the screen is received, it may be further detected whether the volume adjustment region of the screen is woken up. When the volume adjustment region of the screen is not woken up, the input information cannot be received in the volume adjustment region; and when the volume adjustment region of the screen is woken up, the input information can be received in the volume adjustment region.

In this embodiment of this application, a rule for triggering wakeup information to be entered may be preset. When receiving the wakeup information that is entered by the user and that is used to wake up the volume adjustment region, the terminal device is enabled to receive input information in the volume adjustment region. For example, the user may double-tap the screen of the terminal device to trigger the wakeup information to be entered; or the user may enter a preset track on the screen of the terminal device to trigger the wakeup information to be entered, where for example, entering the preset track may be drawing a "circle" or making a "check mark" by the user on the screen of the terminal device; or the user may double-tap the volume adjustment region to trigger the wakeup information to be entered. It should be understood that, when the user triggers, by using the volume adjustment region, the wakeup information to be entered, the wakeup information may have a different setting from the foregoing touch information. It should be understood that the input information includes the first input information and the second input information. Correspondingly, when receiving the wakeup information that is entered by the user and that is used to wake up the volume adjustment region, the terminal device is enabled to receive the first input information or the second input information in the volume adjustment region.

In S703, when the physical form of the screen changes, the volume adjustment region adapts to a changed physical form of the screen to automatically change in location. In this embodiment of this application, the screen changes from the first physical form to the second physical form. The first physical form is different from the second physical form. It should be understood that the second physical form in this embodiment of this application may be any one of physical forms such as the expanded form, the folded form, the holder form, the landscape form, and the portrait form, and is a form different from the first physical form.

For example, the first physical form of the screen is the expanded form shown in FIG. 8, and the second physical form may be another physical form different from the expanded form, for example, the folded form shown in FIG. 9 or the holder form shown in FIG. 10. It should be understood that, when the expanded form is a physical form in the landscape form, as shown in FIG. 8, the second physical form may be the expanded form, the folded form, the holder form, or the like in the portrait form.

In this embodiment of this application, when the screen changes from the first physical form to the second physical form, the volume adjustment region adapts to the second physical form to automatically change in location. In other words, when the screen of the terminal device in this embodiment of this application is in different physical forms, locations of the volume adjustment region on the screen are different. That is, the location of the volume adjustment region on the screen in this embodiment of this application changes with the physical form of the screen.

For example, when the first physical form is the expanded form shown in FIG. 8, and the second physical form is the folded form shown in FIG. 9, the volume adjustment region adapts to the folded form to automatically change in location, to be specific, change from the location on the right side of the screen to the folded location.

It should be understood that, in this embodiment of this application, the volume adjustment region corresponding to the screen of the terminal device in the first physical form or the first physical form may be preset, and the user may also reselect and set, as required, a location that is on a screen in the first physical form and that is of a volume adjustment region corresponding to the screen. A specific process in which the user sets locations that are on screens in different physical forms and that are of volume adjustment regions corresponding to the screens is described in the following descriptions.

In S704 and S705, the terminal device receives, in the second physical form, the second input information of the volume adjustment region, and adjusts the volume of the terminal device based on the second input information. For a specific implementation, refer to the related descriptions in S701 and S702 in the foregoing embodiment. Details are not described herein again.

The volume adjustment method provided in this embodiment of this application includes: The screen of the terminal device in the first physical form receives the first input information of the volume adjustment region. The volume of the terminal device is adjusted based on the first input information. The screen changes from the first physical form to the second physical form. The first physical form is different from the second physical form. The volume adjustment region adapts to the second physical form to automatically change in location. The second input information of the volume adjustment region is received in the second physical form. The volume of the terminal device is adjusted based on the second input information. In the method, the volume adjustment region on the screen of the terminal device may automatically change in location based on a change of the physical form of the screen of the terminal device, to make it easier for the user to adjust the volume of the terminal device in the volume adjustment region. Correspondingly, when receiving input information in the volume adjustment region, the terminal device may adjust the volume of the terminal device based on the input information.

Based on the foregoing embodiment, before receiving the second input information of the volume adjustment region when the screen of the terminal device is in the second physical form, the terminal device further needs to determine the volume adjustment region of the screen in the second physical form based on the physical form of the screen. The following embodiment describes a case in which the volume adjustment region of the second screen is determined when the screen is in the second physical form.

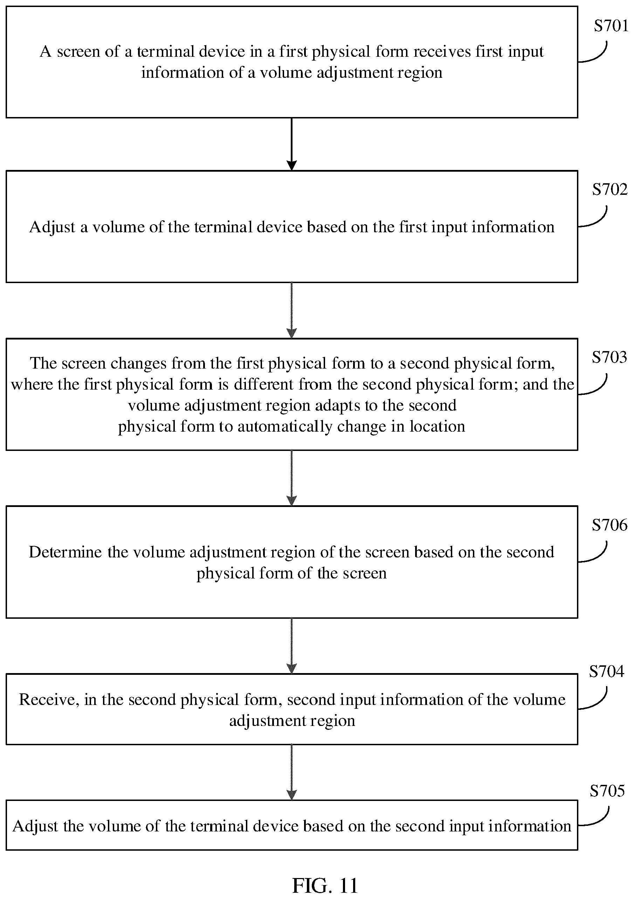

In a possible implementation, FIG. 11 is a schematic flowchart of another embodiment of a volume adjustment method according to the embodiments of this application. As shown in FIG. 11, in this embodiment of this application, before S704, the method may further include:
S706: Determine the volume adjustment region of the screen based on the second physical form of the screen.

As described in the foregoing embodiment of this application, when the screen is in different physical forms, locations of the volume adjustment region on the screen are different. Optionally, as shown in FIG. 8 to FIG. 10, when it is determined that a current physical form of the screen is the expanded form shown in FIG. 8, it may be determined that the volume adjustment region of the screen is at the location on the right side of the screen. When it is determined that a current physical form of the screen is the folded form shown in FIG. 9, it may be determined that the volume adjustment region of the screen is at the location at which the screen is folded in half. When it is determined that a current physical form of the screen is the holder form shown in FIG. 10, it may be determined that the volume adjustment region of the screen is at the bent location of the screen.

In this embodiment of this application, the terminal device stores a correspondence between at least one physical form of the screen and a volume adjustment region. After the current physical form of the screen is determined, a volume adjustment region of the screen may be determined based on the current physical form of the screen and the correspondence. For example, Table 1 shows an example of the correspondence that is between at least one physical form of the screen and a volume adjustment region and that is stored in the terminal device in this embodiment of this application.

**Table 1**

| | |
|---|---|
| Physical form of the screen | Volume adjustment region |
| Expanded form | Location on the right side of the screen |
| Folded form | Location at which the screen is folded in half |
| Holder form | Bent location of the screen |

For example, if it is determined that the current physical form of the screen is the folded form, it may be determined, based on the correspondence, that the volume adjustment region of the screen is the location at which the screen is folded in half.

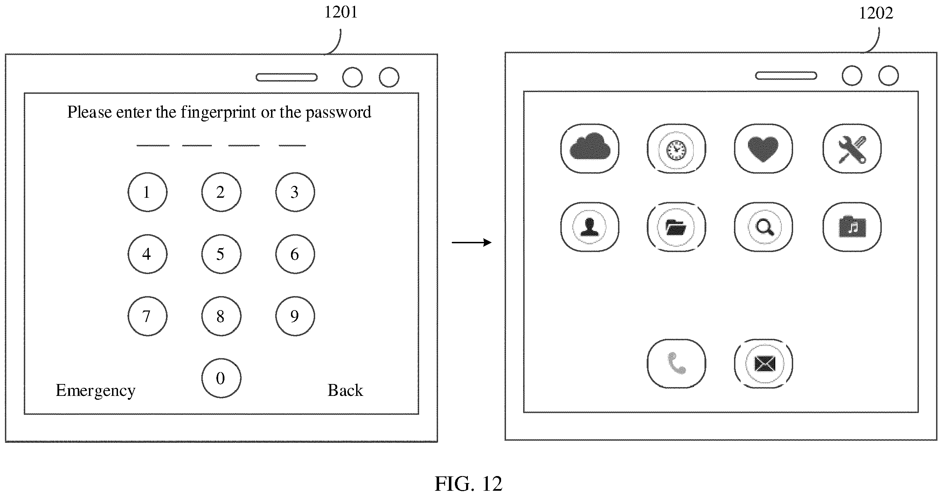

Optionally, in this implementation, the volume adjustment region corresponding to the first physical form of the screen may also be determined in the foregoing manner of determining the volume adjustment region corresponding to the first physical form. Optionally, the first physical form of the screen is a physical form of the screen when an unlocked state is entered. Optionally, the first physical form of the screen may be any physical form of the screen of the terminal device when the unlocked state is entered. FIG. 12 is a schematic diagram of an interface change of a terminal device according to an embodiment of this application. As shown in an interface 1201 in FIG. 12, an interface of the terminal device displays a to-be-unlocked interface, in other words, the terminal device is in a to-be-unlocked state. It may be understood that an unlocking manner of the terminal device in this embodiment of this application may be password unlocking, fingerprint unlocking, facial recognition unlocking, or the like. An example in which unlocking is entering a fixed password is used in the interface 1201 for description. After the user enters an unlock password, the terminal device enters the unlocked state. Correspondingly, the interface 1201 of the terminal device changes to the interface 1202. In this case, a physical form of the screen of the terminal device that enters the unlocked state is the expanded state. In other words, the expanded state is used as the first physical form of the screen. It should be understood that the physical form of the screen of the terminal device that enters the unlocked state in FIG. 12 may be another physical form, and FIG. 12 shows only an example.

In a possible implementation, in this embodiment of this application, the volume adjustment method in this embodiment of this application may be applied to a target application. The target application is a program that enables the volume adjustment region to adapt to the physical form of the screen to automatically change in location. For example, the target application is an application that can play audio and videos, for example, an X audio and video player, an X phone application, or an X social application.

Correspondingly, in this embodiment of this application, an interface of the terminal device whose screen is in the second physical form is a user interface of the target application. When receiving the second input information of the volume adjustment region, the terminal device adjusts a volume of the target application. The target application is a program that enables the volume adjustment region to adapt to the physical form of the screen to automatically change in location.

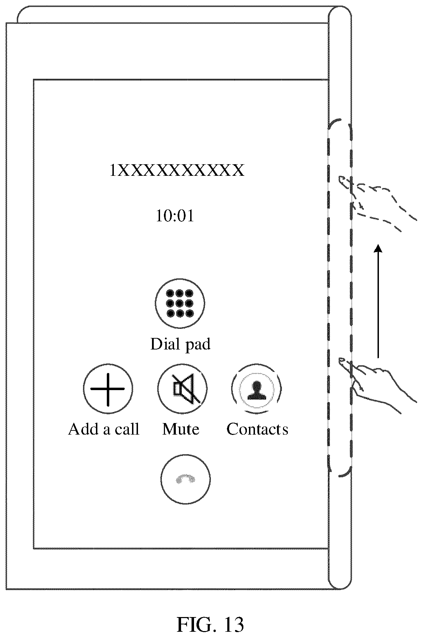

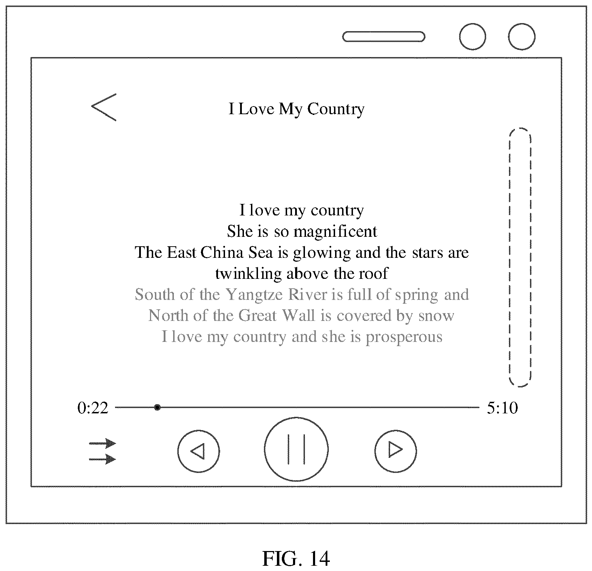

For example, FIG. 13 is a schematic diagram 1 of an interface of a terminal device according to an embodiment of this application. A physical form of a screen of the terminal device shown in FIG. 13 is the folded form, an interface currently displayed by the terminal device is a user interface of the X phone application, and the X phone application is the target application. Correspondingly, in this embodiment, it may be determined, based on the folded form of the screen, that a volume adjustment region of the screen is at a location at which the screen is folded in half. In this case, in a call process, a user may touch the location at which the screen is folded in half to adjust a volume of the call. FIG. 14 is a schematic diagram 2 of an interface of a terminal device according to an embodiment of this application. A physical form of a screen of the terminal device shown in FIG. 14 is the expanded form, an interface currently displayed by the terminal device is a user interface of the X audio and video player, and the X audio and video player is the target application. Correspondingly, in this embodiment, it may be determined, based on the expanded form of the screen, that a volume adjustment region of the screen is at a location on a right side of the screen. In this case, a user may touch the location on the right side of the screen to adjust a volume of audio and video play.

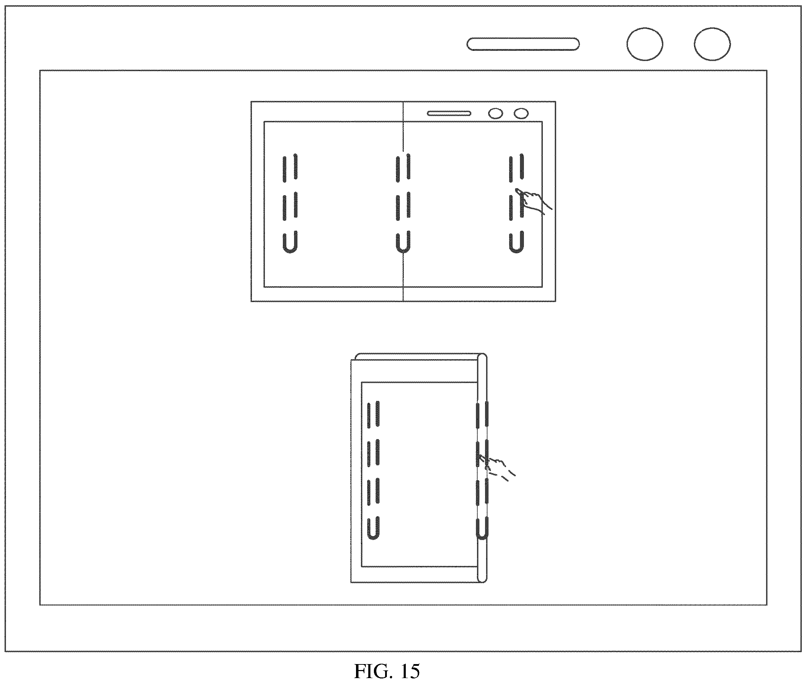

A volume adjustment region for at least one physical form of the screen in this embodiment of this application is defined by the user. The following describes a manner of setting the volume adjustment region for the at least one physical form of the screen in this embodiment of this application with reference to FIG. 15.

A setting interface is displayed when a setting instruction entered by the user is received. The setting instruction is used to instruct to enter a setting interface of the volume adjustment region for the at least one physical form of the screen. In a possible implementation, a rule for triggering the setting instruction to be entered may be preset in this embodiment of this application. For the rule for triggering the setting instruction to be entered, refer to the rule for triggering the wakeup information to be entered in the foregoing embodiment. Details are not described again in this embodiment.

The at least one physical form of the screen and at least one to-be-selected volume adjustment region corresponding to each physical form of the screen are displayed in the setting interface in this embodiment of this application. For example, FIG. 15 is a schematic diagram of a setting interface according to an embodiment of this application. As shown in FIG. 15, two physical forms of the screen are displayed as examples in the setting interface: the expanded form and the folded form, and at least one to-be-selected volume adjustment region is correspondingly displayed for each physical form. As shown in FIG. 15, a to-be-selected volume adjustment region is displayed on a screen in each physical form of the screen. It may be understood that the to-be-selected volume adjustment region may be alternatively displayed on a right side of the screen in each physical form. A display manner of the at least one to-be-selected volume adjustment region corresponding to each physical form of the screen is not limited in this embodiment.

As shown in FIG. 15, a to-be-selected volume adjustment region corresponding to a screen in the expanded form may be at a location in the middle of the screen, a location on a left side of the screen, and a location on a right side of the screen, for example, shown in a dotted-line box on the screen in the expanded form in FIG. 15. A to-be-selected volume adjustment region corresponding to a screen in the folded form may be a folded location of the screen, a location on a left side of the screen, or the like, for example, shown in a dotted-line box on the screen in the folded form in FIG. 15.

In this embodiment of this application, a volume adjustment region corresponding to each physical form of the screen is determined based on selection information of the user for the at least one to-be-selected volume adjustment region corresponding to each physical form of the screen. For example, the user may enter, through tapping or the like, the selection information of the at least one to-be-selected volume adjustment region corresponding to each physical form of the screen. The user may tap, on a screen in the expanded form, a dotted-line box at a location on a right side of the screen, to trigger selection information of a to-be-selected volume adjustment region at the location on the right side of the screen to be entered. The user may tap, on a screen in the folded form, a dotted-line box at a location at which the screen is folded in half, to trigger, to be entered, selection information for a to-be-selected volume adjustment region at the location that is on the screen and at which the screen is folded in half. For example, as shown in FIG. 15, the user selects, as a volume adjustment region, the location on the right side of the screen from the screen in the expanded form, and selects, as a volume adjustment region, the folded location of the screen from the screen in the folded form.

The selection information includes location information, on the screen, of the at least one to-be-selected volume adjustment region that corresponds to each physical form of the screen and that is selected by the user. In this embodiment of this application, after the selection information of the user for the at least one to-be-selected volume adjustment region corresponding to each physical form of the screen is received, the volume adjustment region corresponding to each physical form of the screen may be determined based on the location information, on the screen, that is of the at least one to-be-selected volume adjustment region corresponding to each physical form of the screen and that is included in the selection information. For example, it is determined that the volume adjustment region of the screen in the expanded form is at the location on the right side of the screen, and it is determined that the volume adjustment region of the screen in the expanded form is at the location at which the screen is folded in half.

In this embodiment of this application, a volume adjustment region for each physical form or a correspondence between each physical form and a volume adjustment region may be established and stored based on the volume adjustment region corresponding to each physical form of the screen, as shown in Table 1.

In a possible implementation, if the volume adjustment method in this application is specific to the target application, establishing a volume adjustment region for at least one physical form of the screen may be performing, when the interface currently displayed by the terminal device is the user interface of the target application, a series of steps such as displaying the setting interface when the setting instruction entered by the user is received. It may be understood that, for different applications, locations of corresponding volume adjustment regions on the screen when the screen is in a same physical state may be different.

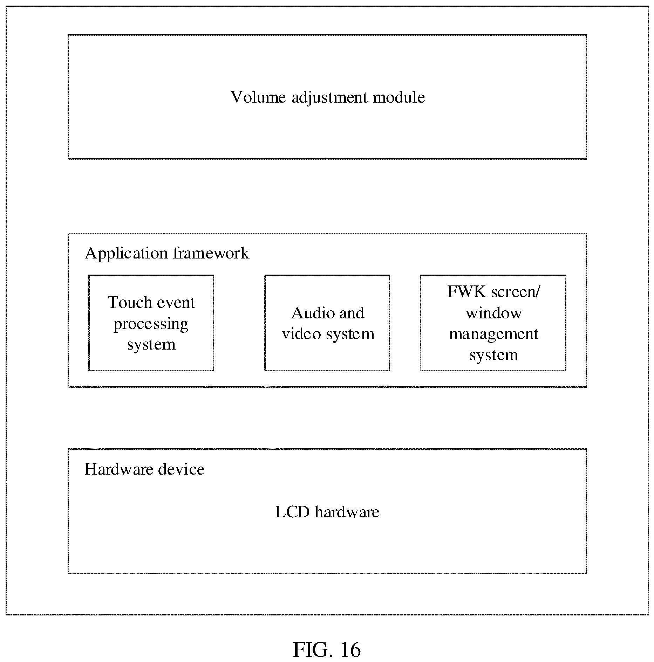

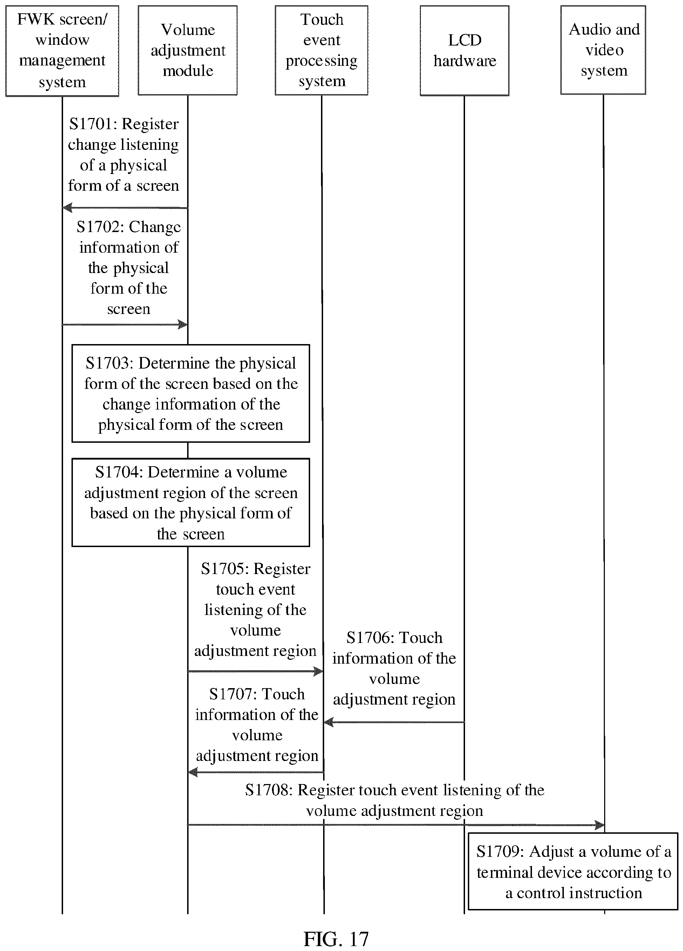

With reference to FIG. 16 and FIG. 17, the following describes, from perspectives of a module and a system inside a terminal device, the volume adjustment method provided in the embodiments of this application. FIG. 16 is a schematic diagram of an operating environment of a terminal device according to an embodiment of this application. As shown in FIG. 16, in this embodiment of this application, a system running on the terminal device may include a volume adjustment module, an application framework, and a hardware device from top to bottom.

The application framework may include various frameworks, for example, a touch event processing system (an input subsystem), an audio and video system (including a volume adjustment capability), and an FWK screen/window management system, that provide framework services for applications. During specific implementation, the frameworks may run in Java space. The volume adjustment module is configured to receive change information that is of a physical form of a screen and that is reported by the FWK screen/window management system and touch information that is of a volume adjustment region and that is reported by the touch event processing system, to control the audio and video system to adjust a volume of the terminal device. The foregoing hardware device may include the screen of the terminal device, for example, LCD hardware for detecting touch information and/or hardware for detecting gesture information. An example in which the hardware device is LCD hardware is used for description below. The LCD hardware may report collected touch information of the volume adjustment region to the touch event processing system, so that the touch event processing system reports the touch information to the volume adjustment module.

FIG. 17 is a signaling flowchart of a volume adjustment method according to an embodiment of this application. As shown in FIG. 17, the method may include the following steps.

S1701: A volume adjustment module may register change listening of a physical form of a screen with an FWK screen/window management system.

In this embodiment of this application, the volume adjustment module may register the change listening of the physical form of the screen with the FWK screen/window management system, so that when detecting that the physical form of the screen changes, the FWK screen/window management system reports change information of the physical form of the screen to the volume adjustment module. The change information may include a changed physical form of the screen, namely, a current physical form of the screen of the terminal device.

S1702: When detecting that the physical form of the screen of the terminal device changes, the FWK screen/window management system reports the change information of the physical form of the screen to the volume adjustment module.

Correspondingly, the volume adjustment module receives the change information of the physical form of the screen from the FWK screen/window management system.

S1703: The volume adjustment module determines the physical form of the screen based on the change information of the physical form of the screen.

S1704: The volume adjustment module determines a volume adjustment region of the screen based on the physical form of the screen.

It should be understood that the volume adjustment module in this embodiment of this application may store a correspondence between at least one physical form of the screen and a volume adjustment region, and the volume adjustment module may determine the volume adjustment region of the screen based on the physical form of the screen in the change information of the screen and the correspondence.

S1705: The volume adjustment module registers touch event listening of the volume adjustment region with a touch event processing system.

In this embodiment of this application, the volume adjustment module may register the touch event listening of the volume adjustment region with the touch event processing system, so that when receiving a touch event (namely, the touch information in the embodiments of this application) reported by LCD hardware, the touch event processing system reports the touch information of the volume adjustment region to the volume adjustment module.

S1706: The touch event processing system receives the touch information that is of the volume adjustment region and that is reported by the LCD hardware.

S1707: The touch event processing system reports the touch information of the volume adjustment region to the volume adjustment module.

Correspondingly, the volume adjustment module receives the touch information that is of the volume adjustment region and that is reported by the touch event processing system.

S1708: The volume adjustment module sends a control instruction to an audio and video system.

The volume adjustment module may determine, based on the touch information, whether to increase or decrease a volume of the terminal device. The control instruction is used to instruct to increase or decrease the volume of the terminal device.

S1709: The audio and video system adjusts the volume of the terminal device according to the control instruction.

It should be understood that, for a manner of adjusting the volume of the terminal device by the audio and video system in this embodiment of this application, refer to a volume adjustment manner in the conventional technology, and details are not described herein.

In this embodiment of this application, the terminal device stores the correspondence between at least one physical form of the screen and a volume adjustment region. The volume adjustment region of the screen can be determined based on the physical form of the screen and the correspondence, so that after input information of the volume adjustment region is obtained, the volume of the terminal device is adjusted based on the input information. In the volume adjustment method in this embodiment of this application, the volume adjustment region on the screen of the terminal device may change with the physical form of the screen of the terminal device, to make it easier for a user to adjust the volume of the terminal device in the volume adjustment region. Further, in this embodiment of this application, the volume adjustment method may be used for a target application, so that flexibility of the terminal device is improved, and the user may independently set the correspondence between at least one physical form of the screen and a volume adjustment region, so that user experience is improved.

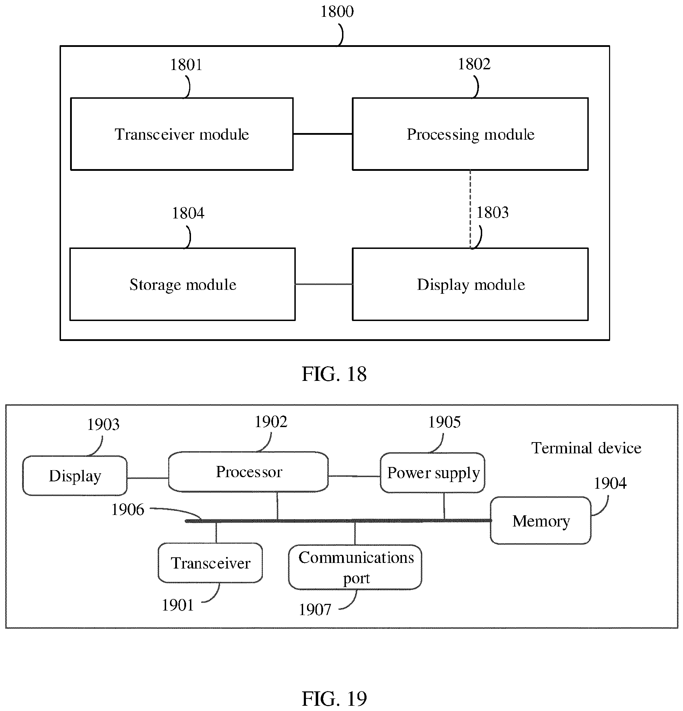

FIG. 18 is a schematic diagram of a structure of a volume adjustment module according to an embodiment of this application. As shown in FIG. 18, the volume adjustment module 1800 includes a transceiver module 1801, a processing module 1802, a display module 1803, and a storage module 1804.

The transceiver module 1801 is used by a screen of the terminal device in a first physical form to receive first input information of a volume adjustment region.

The processing module 1802 is configured to adjust a volume of the terminal device based on the first input information.

The screen changes from the first physical form to a second physical form. The first physical form is different from the second physical form.

The volume adjustment region adapts to the second physical form to automatically change in location.

The transceiver module 1801 is further configured to receive, in the second physical form, second input information of the volume adjustment region.

The processing module 1802 is further configured to adjust the volume of the terminal device based on the second input information.

In a possible design, the processing module 1802 is further configured to determine the volume adjustment region of the screen based on the second physical form of the screen.

In a possible design, the first physical form or the second physical form of the screen includes an expanded form, a folded form, a holder form, a landscape form, or a portrait form, the holder form means that the screen is folded at a predetermined angle, and the predetermined angle is greater than or equal to a folding angle of the screen in the folded form, and is less than or equal to a folding angle of the screen in the expanded form.

In a possible design, when the screen is in the expanded form, a location of the volume adjustment region on the screen is a location on a right side of the screen; when the screen is in the folded form, a location of the volume adjustment region on the screen is a folded location of the screen; and when the screen is in the holder form, a location of the volume adjustment region on the screen is a bent location of the screen.

In a possible design, an interface of the terminal device in the second physical form is a user interface of a target application; and the processing module 1802 is specifically configured to adjust a volume of the target application based on the second input information. The target application is a program that enables the volume adjustment region to adapt to a physical form of the screen to automatically change in location.

In a possible design, the transceiver module 1801 is further configured to receive a setting instruction entered by a user, where the setting instruction is used to instruct to enter a setting interface for setting a volume adjustment region for each physical form of the screen;
the display module 1803 is configured to display the setting interface, where at least one physical form of the screen and at least one to-be-selected volume adjustment region corresponding to each physical form of the screen are displayed in the setting interface;
the processing module 1802 is further configured to determine the volume adjustment region for each physical form of the screen based on selection information of the user for the at least one to-be-selected volume adjustment region corresponding to each physical form of the screen; and
the storage module 1804 is configured to store the volume adjustment region for each physical form of the screen.

In a possible design, the processing module 1802 is further configured to: when the transceiver module 1801 receives wakeup information that is entered by the user and that is used to wake up the volume adjustment region, enable the terminal device to receive the second input information in the volume adjustment region.

In a possible design, the first physical form is a physical form of the screen when an unlocked state is entered.

In a possible design, the first input information/the second input information includes at least one of the following: touch pressure, a touch location, touch duration, and a touch area.

For beneficial effects of the volume adjustment apparatus provided in this embodiment of this application, refer to the beneficial effects in the foregoing volume adjustment method. Details are not described herein again.

FIG. 19 is a schematic diagram of a structure of a terminal device according to an embodiment of this application. As shown in FIG. 19, the terminal device may include a processor 1902 (for example, a CPU), a memory 1904, a display 1903, and a memory 1904.

The transceiver 1901 is used by a screen of the terminal device in a first physical form to receive first input information of a volume adjustment region.

The processor 1902 is configured to adjust a volume of the terminal device based on the first input information.

The screen changes from the first physical form to a second physical form. The first physical form is different from the second physical form.

The volume adjustment region adapts to the second physical form to automatically change in location.

The transceiver 1901 is further configured to receive, in the second physical form, second input information of the volume adjustment region.

The processor 1902 is further configured to adjust the volume of the terminal device based on the second input information.

In a possible design, the processor 1902 is further configured to determine the volume adjustment region of the screen based on the second physical form of the screen.

In a possible design, the first physical form or the second physical form of the screen includes an expanded form, a folded form, a holder form, a landscape form, or a portrait form, the holder form means that the screen is folded at a predetermined angle, and the predetermined angle is greater than or equal to a folding angle of the screen in the folded form, and is less than or equal to a folding angle of the screen in the expanded form.

In a possible design, when the screen is in the expanded form, a location of the volume adjustment region on the screen is a location on a right side of the screen; when the screen is in the folded form, a location of the volume adjustment region on the screen is a folded location of the screen; and when the screen is in the holder form, a location of the volume adjustment region on the screen is a bent location of the screen.

In a possible design, an interface of the terminal device in the second physical form is a user interface of a target application; and the processor 1902 is specifically configured to adjust a volume of the target application based on the second input information. The target application is a program that enables the volume adjustment region to adapt to a physical form of the screen to automatically change in location.

In a possible design, the transceiver 1901 is further configured to receive a setting instruction entered by a user, where the setting instruction is used to instruct to enter a setting interface for setting a volume adjustment region for each physical form of the screen;
the display 1903 is configured to display the setting interface, where at least one physical form of the screen and at least one to-be-selected volume adjustment region corresponding to each physical form of the screen are displayed in the setting interface;
the processor 1902 is further configured to determine the volume adjustment region for each physical form of the screen based on selection information of the user for the at least one to-be-selected volume adjustment region corresponding to each physical form of the screen; and
the memory 1904 is configured to store the volume adjustment region for each physical form of the screen.

In a possible design, the processor 1902 is further configured to: when the transceiver 1901 receives wakeup information that is entered by the user and that is used to wake up the volume adjustment region, enable the terminal device to receive the second input information in the volume adjustment region.

In a possible design, the first physical form is a physical form of the screen when an unlocked state is entered.

In a possible design, the first input information/the second input information includes at least one of the following: touch pressure, a touch location, touch duration, and a touch area.

The transceiver 1901 is coupled to the processor 1902, and the processor 1902 controls a reception/transmission action of the transceiver 1901. The memory 1904 may include a high-speed random-access memory (random-access memory, RAM), and may further include a non-volatile memory (non-volatile memory, NVM), for example, at least one disk memory. The memory 1904 may store various instructions, to complete various processing functions and implement the method steps in this application. Optionally, the terminal device in this application may further include a power supply 1905, a communications bus 1906, and a communications port 1907. The transceiver 1901 may be integrated into a transceiver of the terminal device, or may be an independent transceiver antenna of the terminal device. The communications bus 1906 is configured to implement a communication connection between elements. The communications port 1906 is configured to implement a connection and communication between the terminal device and another peripheral. The display 1903 may be connected to the processor 1902, to display the setting interface in the foregoing embodiment under control of the processor 1902.

In this embodiment of this application, the memory 1904 is configured to store computer executable program code. The program code includes instructions. When the processor 1902 executes the instructions, the instructions cause the processor 1902 of the terminal device to perform the processing action of the terminal device in the foregoing method embodiments and cause the transceiver 1901 to perform the reception/transmission action of the terminal device in the foregoing method embodiments. Implementation principles and technical effects thereof are similar, and are not described herein again.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state disk (Solid State Disk, SSD)), or the like.

The term "a plurality of' in this specification refers to two or more than two. The term "and/or" in this specification describes only an association between associated objects and represents that three relationships may exist. For example, A and/or B may represent the following three cases: Only A exists, both A and B exist, and only B exists. In addition, the character "/" in this specification usually indicates an "or" relationship between the associated objects. In a formula, the character "/" indicates a "division" relationship between associated objects.

It may be understood that various numbers in the embodiments of this application are merely used for ease of distinguishing, and are not used to limit the scope of the embodiments of this application.

It may be understood that in the embodiments of this application, sequence numbers of the foregoing processes do not mean execution sequences. The execution sequences of the processes should be determined based on functions and internal logic of the processes, and should not be construed as any limitation on the implementation processes of the embodiments of this application.

## Claims

1. A volume adjustment method, applied to a terminal device, wherein the method comprises:
receiving, by a screen of the terminal device in a first physical form, first input information of a volume adjustment region;
adjusting a volume of the terminal device based on the first input information;
changing, by the screen, the first physical form to a second physical form, wherein the first physical form is different from the second physical form;
adapting, by the volume adjustment region, to the second physical form to automatically change in location;
receiving, in the second physical form, second input information of the volume adjustment region; and
adjusting the volume of the terminal device based on the second input information.

2. The method according to claim 1, wherein before the receiving, in the second physical form, second input information of the volume adjustment region, the method further comprises:
determining the volume adjustment region of the screen based on the second physical form of the screen.

3. The method according to claim 1 or 2, wherein the first physical form or the second physical form of the screen comprises an expanded form, a folded form, a holder form, a landscape form, or a portrait form, the holder form means that the screen is folded at a predetermined angle, and the predetermined angle is greater than or equal to a folding angle of the screen in the folded form, and is less than or equal to a folding angle of the screen in the expanded form.

4. The method according to claim 3, wherein
when the screen is in the expanded form, a location of the volume adjustment region on the screen is a location on a right side of the screen;
when the screen is in the folded form, a location of the volume adjustment region on the screen is a folded location of the screen; and
when the screen is in the holder form, a location of the volume adjustment region on the screen is a bent location of the screen.

5. The method according to any one of claims 1 to 4, wherein an interface of the terminal device in the second physical form is a user interface of a target application, and the adjusting the volume of the terminal device based on the second input information comprises:
adjusting a volume of the target application based on the second input information, wherein the target application is a program that enables the volume adjustment region to adapt to a physical form of the screen to automatically change in location.

6. The method according to any one of claims 1 to 5, wherein the method further comprises:
receiving a setting instruction entered by a user, wherein the setting instruction is used to instruct to enter a setting interface for setting a volume adjustment region for at least one physical form of the screen;
displaying the setting interface, wherein the at least one physical form of the screen and at least one to-be-selected volume adjustment region corresponding to each physical form of the screen are displayed in the setting interface;
determining a volume adjustment region for each physical form of the screen based on selection information of the user for the at least one to-be-selected volume adjustment region corresponding to each physical form of the screen; and
storing the volume adjustment region for each physical form of the screen.

7. The method according to any one of claims 1 to 6, before the receiving, in the second physical form, second input information of the volume adjustment region, further comprising:
when wakeup information that is entered by the user and that is used to wake up the volume adjustment region is received, enabling the terminal device to receive the second input information in the volume adjustment region.

8. The method according to claim 2, wherein the first physical form is a physical form of the screen of the terminal device when an unlocked state is entered.

9. The method according to any one of claims 1 to 8, wherein the first input information/the second input information comprises touch information and/or gesture information.

10. A terminal device, comprising:
a transceiver, used by a screen of the terminal device in a first physical form to receive first input information of a volume adjustment region; and
a processor, configured to adjust a volume of the terminal device based on the first input information, wherein
the screen changes from the first physical form to a second physical form, wherein the first physical form is different from the second physical form;
the volume adjustment region adapts to the second physical form to automatically change in location;
the transceiver is further configured to receive, in the second physical form, second input information of the volume adjustment region; and
the processor is further configured to adjust the volume of the terminal device based on the second input information.

11. The terminal device according to claim 10, wherein the processor is further configured to determine the volume adjustment region of the screen based on the second physical form of the screen.

12. The terminal device according to claim 10 or 11, wherein the first physical form or the second physical form of the screen comprises an expanded form, a folded form, a holder form, a landscape form, or a portrait form, the holder form means that the screen is folded at a predetermined angle, and the predetermined angle is greater than or equal to a folding angle of the screen in the folded form, and is less than or equal to a folding angle of the screen in the expanded form.

13. The terminal device according to claim 12, wherein
when the screen is in the expanded form, a location of the volume adjustment region on the screen is a location on a right side of the screen;
when the screen is in the folded form, a location of the volume adjustment region on the screen is a folded location of the screen; and
when the screen is in the holder form, a location of the volume adjustment region on the screen is a bent location of the screen.

14. The terminal device according to any one of claims 10 to 13, wherein an interface of the terminal device in the second physical form is a user interface of a target application; and
the processor is specifically configured to adjust a volume of the target application based on the second input information, wherein the target application is a program that enables the volume adjustment region to adapt to a physical form of the screen to automatically change in location.

15. The terminal device according to claim 14, wherein the terminal device further comprises a display and a memory;
the transceiver is further configured to receive a setting instruction entered by a user, wherein the setting instruction is used to instruct to enter a setting interface for setting a volume adjustment region for each physical form of the screen;
the display is configured to display the setting interface, wherein at least one physical form of the screen and at least one to-be-selected volume adjustment region corresponding to each physical form of the screen are displayed in the setting interface;
the processor is further configured to determine the volume adjustment region for each physical form of the screen based on selection information of the user for the at least one to-be-selected volume adjustment region corresponding to each physical form of the screen; and
the memory is configured to store the volume adjustment region for each physical form of the screen.

16. The terminal device according to any one of claims 10 to 15, wherein the processor is further configured to: when the transceiver receives wakeup information that is entered by the user and that is used to wake up the volume adjustment region, enable the terminal device to receive the second input information in the volume adjustment region.

17. The terminal device according to claim 11, wherein the first physical form is a physical form of the screen when an unlocked state is entered.

18. The terminal device according to any one of claims 10 to 17, wherein the first input information/the second input information comprises at least one of the following: touch pressure, a touch location, touch duration, and a touch area.

19. A terminal device, wherein the terminal device stores a computer program, and when the computer program is executed by the terminal device, the method according to any one of claims 1 to 9 is implemented.

20. A computer-readable storage medium, wherein the computer-readable storage medium stores a computer program or instructions, and when the computer program or the instructions are run, the method according to any one of claims 1 to 9 is implemented.

21. A program product, wherein the program product comprises a computer program, the computer program is stored in a readable storage medium, at least one processor of a communications apparatus may read the computer program from the readable storage medium, and the at least one processor executes the computer program, so that the communications apparatus is enabled to implement the method according to any one of claims 1 to 9.
